# EUROPEAN PATENT APPLICATION

(11) **EP 4 506 236 A1**
(43) Date of publication of application: **12.02.2025**
(21) Application number: 24193596.4
(22) Date of filing: 08.08.2024
(51) Int. Cl.: B62J 45/00, G06Q 30/018, G06Q 90/00

(54) **SYSTEM, METHOD AND COMPUTER-READABLE MEDIUM FOR RECORDING AND VERIFYING CYCLING ACTIVITIES**

(30) Priority: 08.08.2023 US 202363518321 P; 07.08.2024 US 202418796319
(71) Applicant: Giant Manufacturing Co., Ltd., Taichung City, 40763 (TW)
(72) Inventor: LIU, Yuon-Chan, Taichung City (TW); CHANG, Teng-Chi, Taichung City (TW); CHEN, Bo-Chiuan, Taichung City (TW); KAO, Pei-Huan, Taichung City (TW); LIU, Chia-Chieh, Taichung City (TW)
(74) Representative: Finnegan Europe LLP

(57) **Abstract**

A system for recording and verifying cycling activities is provided. The system includes an interface configured to receive an output from a sensor configured to detect a location reference of a bicycle associated or registered with the system, and a user module configured to provide a user interface to enable a user to access an account associated with the user, an organization, or both; a footprint generation module configured to receive through the interface the location reference of the bicycle to obtain, based at least on a movement of the bicycle or the location reference, carbon footprint information; and a record update module configured to update, based on the carbon footprint information, a carbon footprint record associated with the account. A transaction module communicating with the record update module or a server storing information associated with the account is configured to derive a carbon footprint credit based on one or more changes in the carbon footprint record or the carbon footprint information and an account management module in communication with the record update module, the server, and/or the transaction module is configured to certify the carbon footprint credit, or to enable exchange using the carbon footprint credit or the carbon footprint information.

## Description

### RELATED APPLICATIONS

This application claims priority to and the benefits of U.S. Provisional Application No. 63/518, 321 filed on August 8, 2023, which is incorporated herein by reference in its entirety.

### TECHNICAL FIELD

The disclosure relates to a system, a method, and a computer-readable medium for recording and verifying cycling activities.

### BACKGROUND

Cycling and other emission-free or low-emission transportations are gaining popularity, especially when being compared to other modes of transportation, exercise, or activities that requires more energy, results in more emission, or less green in other ways. Bicycle users or riders may propel with human power, partial electric power assist, and full electric power, depending on the types of bicycles and riding configurations. Cycling, with power assist or not, has broad and various applications, such as transportation, travel, leisure, exercise, sports, and competition.

In recent years, shared bicycles, commuter bicycles, electric scooters, hoverboards, and similar devices and related services are becoming widespread, easily accessible, or more sustainable. Local and central governments, municipalities, organizations, and private or public institutions or companies frequently promote sustainable, green, low-emission, or zero-emission transportation options and provide systems, solutions, platforms, and mechanisms for tracking the use of these options. Furthermore, with the development of new technologies, various electric bicycles have become available to enable riders or users to operate bicycles with or without electric power assist, riding bicycles in self-powered, hybrid, fully electric powered, or mixed mode.

Users of low-emission, zero-emission, or other environmentally-friendly transportation may record the use of sustainable transportation, which may result in carbon credit or carbon, green, sustainability, or ESG (environmental, social, or governmental) points, credits, qualifications, or considerations.

### SUMMARY

In some embodiments, a system for recording and verifying cycling activities includes: a sensor detects a movement of a bicycle and provides distance information; a terminal device comprising a user module provides a user interface to enable a user to log in and access personal information of the user; a conversion module converts the distance information received from the sensor into carbon footprint information; and a communication module transmits the carbon footprint information to a server to update a carbon footprint record associated with an account associated with at least the user or an organization; and wherein a transaction module communicating with the server or the communication module derives a carbon footprint credit based on one or more changes in the carbon footprint record, wherein an account management module communicating with the server, the communication module, or the transaction module certifies or verifies the carbon footprint credit or exchange or transact in the carbon footprint credit.

In some embodiments, a method for recording and verifying cycling activities includes: receiving a login request from a user; performing a first check on whether a distance difference of a current location and a last recorded location corresponds to a time interval range of a current time and a last recorded time, in response to receiving a start command; receiving distance information from a sensor, in response to the first check is verified; performing a second check on the distance information; stopping receiving the distance information from the sensor, in response to the second check is verified and receiving a stop command; performing a third check on carbon footprint information converted from the distance information; and transmitting the carbon footprint information to a server to update a carbon footprint record, in response to the third check is verified.

In some embodiments, a non-transitory computer-readable medium storing instructions that is executable by at least one processor of a system to cause the system to perform a method for recording and verifying cycling activities. The method includes: receiving a login request from a user; performing a first check on whether a distance difference of a current location and a last recorded location corresponds to a time interval range of a current time and a last recorded time, in response to receiving a start command; receiving distance information from a sensor, in response to the first check is verified; performing a second check on the distance information; stopping receiving the distance information from the sensor, in response to the second check is verified and receiving a stop command; performing a third check on carbon footprint information converted from the distance information; and transmitting the carbon footprint information to a server to update a carbon footprint record, in response to the third check is verified.

### BRIEF DESCRIPTION OF THE DRAWINGS

Aspects of the present disclosure are best understood from the following detailed description when read with the accompanying figures. The accompanying drawings, which are incorporated in and constitute a part of this specification, illustrate several exemplary embodiments and, together with the corresponding descriptions, provide examples for explaining the disclosed embodiment consistent with the present disclosure and related principles. It is noted that, in accordance with the standard practice in the industry, various features are not drawn to scale. In fact, the dimensions of the various features may be arbitrarily increased or reduced for clarity of discussion.
Fig. 1 is a schematic diagram illustrating an example system for recording and verifying cycling activities, according to some embodiments of the present disclosure.
Fig. 2 is a flowchart of an example process illustrating a carbon credit scheme for recording and verifying cycling activities, according to some embodiments of the present disclosure.
Figs. 3-4 are schematic diagrams illustrating example mechanisms of obtaining and exchanging carbon credits, according to some embodiments of the present disclosure.
Figs. 5-7 are flowcharts of example processes of methods for carbon credit generation, according to some embodiments of the present disclosure.
Fig. 8 is a schematic diagram illustrating example operations for distance measurements including GPS sensors, according to some embodiments of the present disclosure.
Fig. 9 is a schematic diagram illustrating example operations for distance measurements including speed sensors, according to some embodiments of the present disclosure.
Figs. 10-11 are schematic diagrams illustrating example operations for distance measurements including RFID sensors, according to some embodiments of the present disclosure.
Figs. 12-16 are schematic diagrams illustrating example operations for distance measurements including beacon signals, according to some embodiments of the present disclosure.
Fig. 17 is a schematic diagram illustrating example operations for distance measurements including mobile network signals, according to some embodiments of the present disclosure.
Fig. 18 is a flowchart illustrating example operations for data verification, according to some embodiments of the present disclosure.
Fig. 19 illustrates example valid cycling routes and invalid cycling routes, according to some embodiments of the present disclosure.

### DETAILED DESCRIPTION

Reference will now be made in detail to embodiments, examples of which are illustrated in the accompanying drawings and disclosed herein. The implementations set forth in the following description of embodiments are examples of systems and methods consistent with the aspects related to the disclosure and do not limit the scope of the present disclosure.

The following disclosure provides a number of embodiments, or examples, for implementing different features of the provided subject matter. Specific examples of components and arrangements are described below to simplify the present disclosure. These are, of course, merely examples and are not intended to be limiting. Features of any of the embodiments described herein may be combined with other features of other embodiments, except where otherwise contradictory. In addition, the present disclosure may repeat reference numerals and/or letters in the various examples. This repetition is for the purpose of simplicity and clarity and does not in itself dictate a relationship between the various embodiments and/or configurations discussed.

The terms used in this specification generally have their ordinary meanings in the art and in the specific context where each term is used. The use of examples in this specification, including examples of any terms discussed herein, is illustrative only, and in no way limits the scope and meaning of the disclosure or of any exemplified term. Likewise, the present disclosure is not limited to various embodiments given in this specification.

Although the terms "first," "second," etc., may be used herein to describe various elements, these elements should not be limited by these terms. These terms are used to distinguish one element from another. For example, a first element could be termed a second element, and, similarly, a second element could be termed a first element, without departing from the scope of the embodiments. As used herein, the term "and/or" includes any and all combinations of one or more of the associated listed items.

Further, spatially relative terms, such as "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

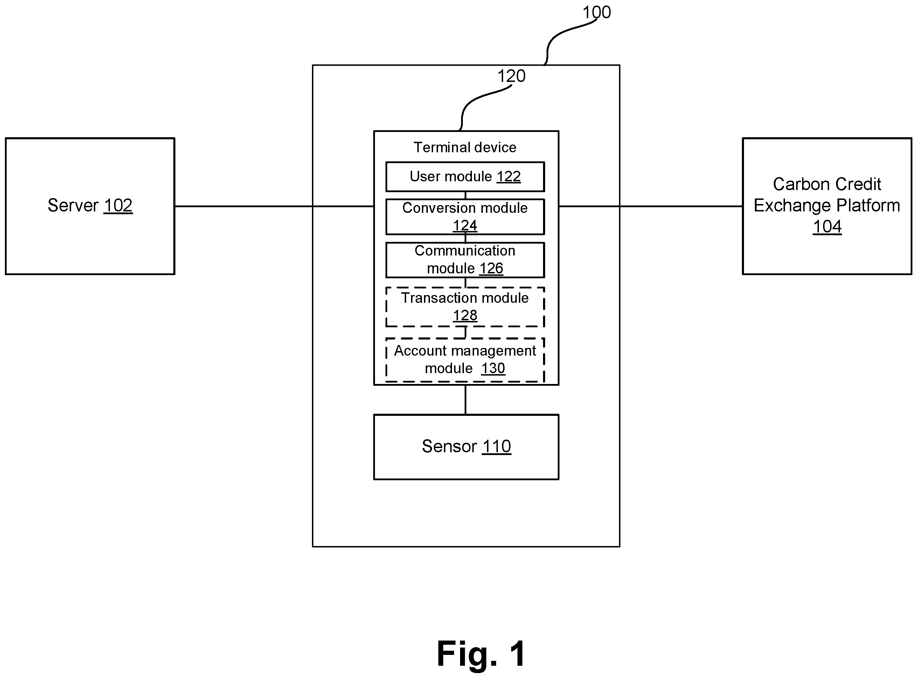

Fig. 1 is a schematic diagram illustrating an example system 100 for recording and verifying cycling activities, according to some embodiments of the present disclosure. As shown in Fig. 1, the system 100 includes a sensor 110 and a terminal device 120. The sensor 110 is configured to detect a movement of a bicycle (e.g., a bike or an e-bike) and provide distance information. The terminal device 120 includes a user module 122, a conversion module 124, and a communication module 126. The user module 122 is configured to provide a user interface to enable a user to log in and access personal information of the user. The conversion module 124 is configured to convert the distance information received from the sensor into carbon footprint information. The communication module 126 is configured to transmit the carbon footprint information to a server 102 (e.g., for the server 102) to update a carbon footprint record associated with an account associated with at least the user or an organization. In one embodiment, the terminal device 120 may or may not include a transaction module 128. The transaction module 128 communicating with the server 102 or the communication module 126 is configured to derive a carbon footprint credit based on one or more changes in the carbon footprint record. In one embodiment, the terminal device 120 may or may not include an account management module 130. The account management module 130 communicating with the server 102, the communication module 126, or the transaction module 128 is configured to certify or verify the carbon footprint credit or exchange or transact in the carbon footprint credit, e.g., on a carbon credit exchange platform 104.

In one embodiment, the terminal device 120 may be an on-board unit (OBU), a mobile device, a tablet, or a wearable device. In one embodiment, the terminal device is the OBU, and the sensor 110 is installed on the bicycle. In one embodiment, the terminal device 120 is the mobile device, and the sensor 110 is incorporated into the mobile device. In one embodiment, the personal information of the user includes at least one of an accumulated riding distance, an accumulated riding time, a previous bicycle type, the carbon footprint record, or any combination thereof. In one embodiment, the carbon footprint information includes at least one of a current riding distance (e.g., moving distance or cycling mileage), a current riding time, a current bicycle type, or any combination thereof. In one embodiment, the conversion module 124 is further configured to transmit the carbon footprint information to the server 102 to update the carbon footprint record, when the distance information or the carbon footprint information is verified.

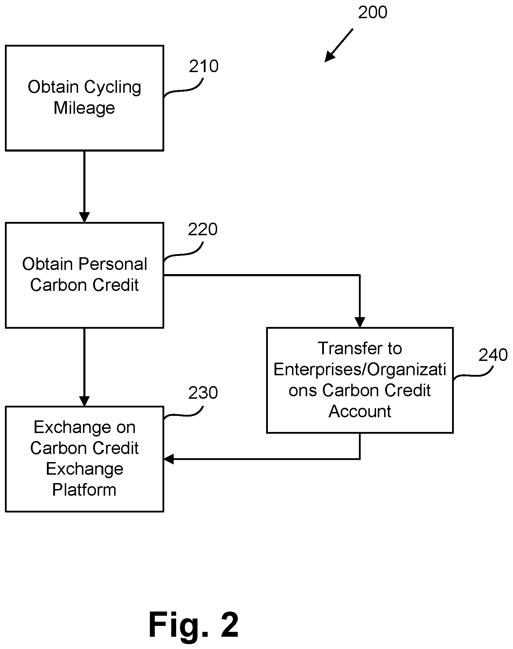

Fig. 2 is a flowchart of an example process 200 illustrating a carbon credit scheme for recording and verifying cycling activities, according to some embodiments of the present disclosure. As shown in Fig. 2, during the cycling activities, in step 210, cycling mileage can be obtained (e.g., counted, measured, calculated) and recorded by using an OBU on a bicycle or a mobile device (e.g., a mobile phone, smartwatches, other portable electronic devices or other wearable electronic devices). Then, in step 220, according to the recorded (e.g., updated) data, carbon dioxide (CO2) certificates can be obtained, and the cycling mileage can be converted into carbon credits. In some embodiments, the obtained carbon credits are personal carbon credits, which can be exchanged (e.g., transacted) on a carbon credit exchange platform, as in step 230, or can be first transferred to an enterprise or organization account, as in step 240. The carbon credit exchange platform provides a platform where a company, an organization, and/or a citizen can purchase carbon credit units to compensate greenhouse gas emissions, or sell extra carbon credit units to other parties, thereby encouraging one or more entities to reduce carbon footprint.

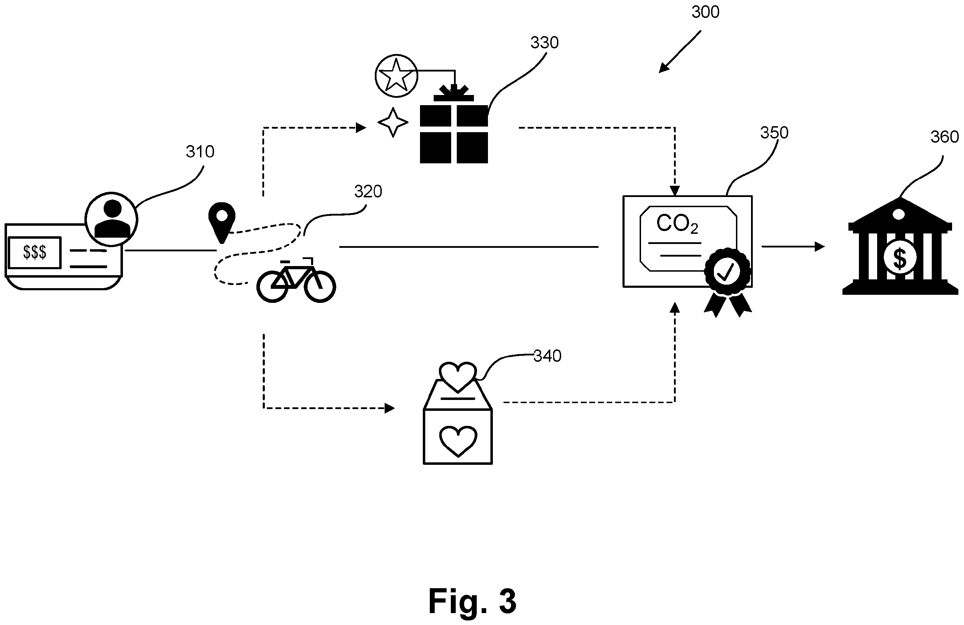

Figs. 3-4 are schematic diagrams illustrating example mechanisms 300, 400 of obtaining (e.g., collecting) and exchanging carbon credits, according to some embodiments of the present disclosure. As shown in Fig. 3, a user can create a personal account or a cycling passport 310, which is associated with a carbon passbook. The user may ride a bicycle for commuting and accumulate cycling mileage 320 thereby generating riding data (e.g., distance, riding time, bicycle type, ride type, operator/user vital signs (e.g., heart rate, power output, respiration rate, among others), etc.).

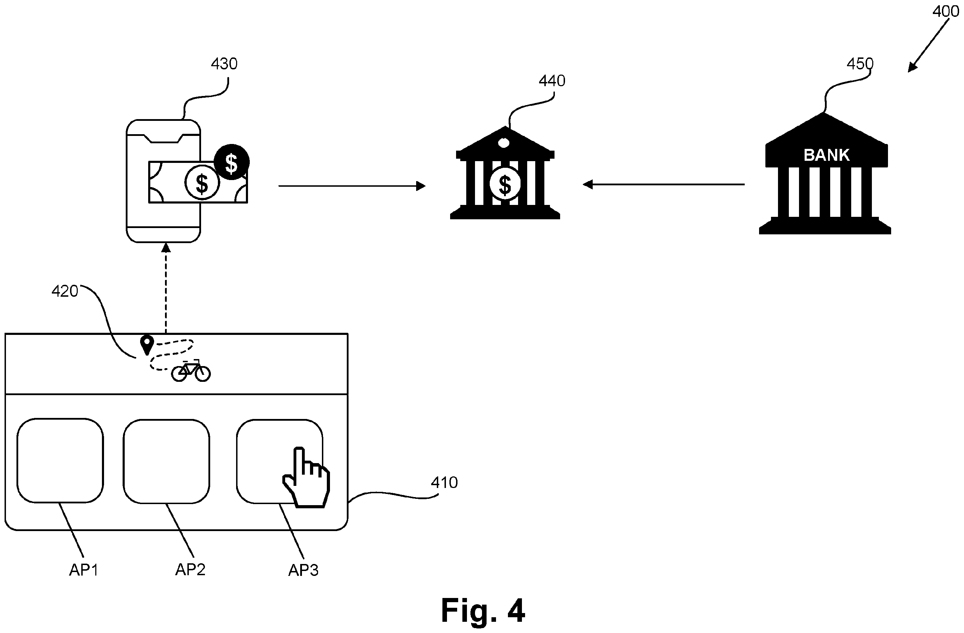

The accumulated cycling mileage 320 may be converted into carbon credits. In some embodiments, when the user participates in a consumer engagement program 330, an enterprise or organization may redeem the accumulated cycling mileage 320 to issue carbon credits. In some embodiments, the user may also engage in public welfare programs 340 and donate the accumulated cycling mileage 320 or the carbon credits generated from the accumulated mileage 320. After the carbon credits are issued (e.g., certified), e.g., obtaining CO2 certification 350, the carbon credits can be exchanged (e.g., transacted) on a carbon credit exchange platform 360. As shown in Fig. 4, an enterprise or organization may also have a carbon passbook 430 to store carbon credits generated from accumulating cycling mileage 420 by a user logging in via a user interface 410 (e.g., applications (APPs) AP1-AP3). Each of the APPs APP1-APP3 may be any APP for the user to log in. A carbon credit exchange platform 440 can communicate with the carbon passbook 430 of the enterprise or organization and a system of a third-party bank 450 for performing carbon credit exchange or transaction.

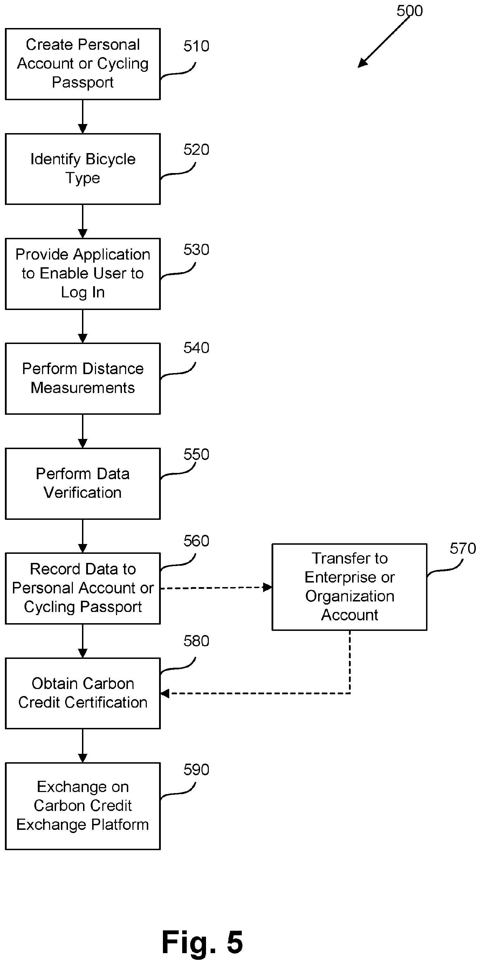

Fig. 5 is a flowchart of an example process 500 illustrating a method for carbon credit generation for a personal bicycle or a rental bicycle system, according to some embodiments of the present disclosure. As shown in Fig. 5, in step 510, a personal account or a cycling passport is created and activated. Then, in step 520, before cycling, a bicycle type may be identified (e.g., a human-powered bicycle, a pedal-assisted bicycle, an electric bicycle, an e-scooter, etc.), which is one of factors (e.g., weight) for calculating the carbon credits. Then, in step 530, a corresponding application (e.g., one of the APPs AP1-AP3 as shown in Fig. 4) may be provided to enable a user to log in on a mobile device or a cycling computer for measuring and tracking a riding distance. Then, in step 540, distance measurements may be performed. In various embodiments, the distance measurements can be performed by using different approaches, including, but not limited to, using Global Positioning System (GPS) signals, Radio Frequency Identification (RFID) signals, beacon signals, mobile network signals, or a speed sensor in the cycling computer.

Then, in step 550, after riding data is obtained (e.g., collected), a data verification may be performed to filter out abnormal or potentially fraudulent data. Data verification, as described in greater detail below, may include, for example, comparing various aspects of the riding data to determine whether the riding data corresponds with normal human activity. According to some embodiments, user vital signs (e.g., heart rate) may be compared with ride speed, distance, and/or power output to determine whether an operator/user of the bicycle was actually riding the bicycle, or whether the data may be fraudulent or otherwise erroneous.

According to further embodiments, one or more data verifications may be configured to compare sensor data from a plurality of sensors to determine whether riding data is accurate. For example, distance information determined by a mobile device may be compared to distance information determined by a wheel sensor of the bicycle to verify whether the distance information from either sensor is accurate. In another example, speed information may be compared between sensors (e.g., mobile phone and wheel sensor) to determine whether the values correspond within a predetermined threshold (e.g., 5 percent). Where the values fall within the threshold, the data may be determined to be accurate and verified. The illustrative verifications noted herein are not intended as limiting, and other verifications may be undertaken as desired (e.g., bicycle GPS sensor comparison with mobile GPS sensor data).

After the data verification, in step 560, the riding data may be recorded to the personal account or the cycling passport. In some embodiments, as in step 570, the riding data recorded to the personal account or the cycling passport can be further transferred to an enterprise or organization account, as set by various programs or agreements between the user and the enterprise or organization. In step 580, the riding data stored in the personal account or the enterprise or organization account can be used to obtain carbon credit certification. In step 590, the obtained carbon credits can be exchanged (e.g., transacted) on a carbon credit exchange platform.

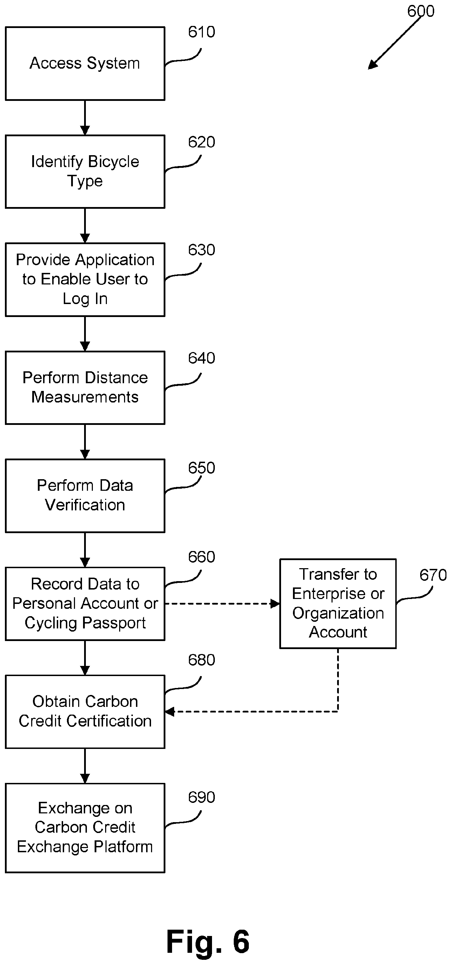

Fig. 6 is a flowchart of an example process 600 illustrating another method for carbon credit generation for a shared bicycle system, according to some embodiments of the present disclosure. As shown in Fig. 6, in step 610, a user may use an electronic ticket, a stored value card, or a mobile device to access the shared bicycle system. The electronic ticket, the stored value card, or the mobile device may be linked to the user's personal account or cycling passport, which is associated with a carbon passbook. Similarly, in step 620, before cycling, the shared bicycle system may identify the bicycle type (e.g., a human-powered bicycle, a pedal-assisted bicycle, an electric bicycle, an e-scooter, etc.), which is one of factors (e.g., weight) for calculating the carbon credits. Then, in step 630, a corresponding application may be provided to the user to log in on a mobile device or a cycling computer for measuring and tracking a riding distance. Then, in step 640, distance measurements are performed. In various embodiments, the distance measurements can be performed by using different approaches, including, but not limited to, using GPS signals, RFID signals, beacon signals, mobile network signals, or a speed sensor in the cycling computer.

Then, in step 650, after the riding data is obtained (e.g., collected), a data verification can be performed to filter out abnormal, inaccurate, or potentially fraudulent data. After the verification, in step 660, the riding data can be recorded to the personal account or the cycling passport. In some embodiments, as in step 670, the riding data recorded to the personal account or the cycling passport can be further transferred to an enterprise or organization account, as set by various programs or agreements between the user and the enterprise or organization. In step 680, the riding data stored in the personal account or the enterprise or organization account can be used to obtain carbon credit certification. In step 690, the obtained carbon credits can be exchanged (e.g., transacted) on the carbon credit exchange platform.

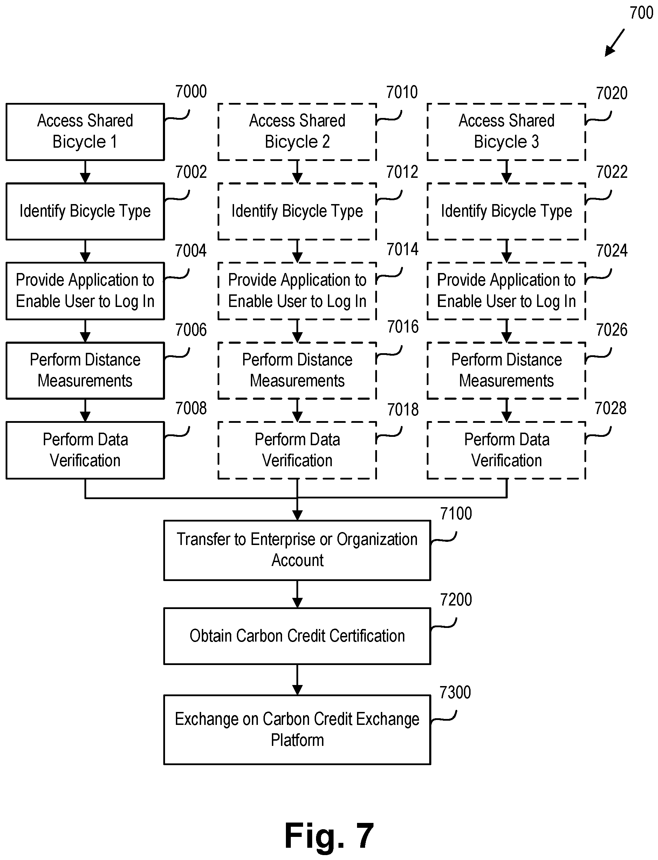

Fig. 7 is a flowchart of an example process 700 illustrating another method for carbon credit generation for a shared bicycle system, according to some embodiments of the present disclosure. As shown in Fig. 7, in steps 7000, 7010 and 7020, users may access shared bicycles (e.g., shared bicycles 1-3), respectively, in the shared bicycle system (e.g., by using electronic tickets, stored value cards, or a mobile devices). In steps 7002, 7012 and 7022, each shared bicycle may identify the bicycle type (e.g., a human-powered bicycle, a pedal-assisted bicycle, an electric bicycle, an e-scooter, etc.), which is one of factors (e.g., weight) for calculating the carbon credits Then, in steps 7004, 7014 and 7024, each shared bicycle may use a cycling computer located on each of the shared bicycle for measuring and tracking a riding distance. Then, in steps 7006, 7016 and 7026, distance measurements are performed. In various embodiments, the distance measurements can be performed by using one or more different approaches, including, but not limited to, using GPS signals, RFID signals, beacon signals, mobile network signals, or a speed sensor in the cycling computer. Then, in steps 7008, 7018 and 7028, after the riding data is obtained (e.g., collected), a data verification can be performed to filter out abnormal or potentially fraudulent data. In step 7100, after the data verification, the riding data recorded from different shared bicycles can be (e.g., directly and collectively) transferred (e.g., recorded) to an enterprise or organization account, as set by various programs or agreements between the users and an enterprise or organization (e.g., a bicycle sharing service provider) owing (e.g., creating) the enterprise or organization account. In step 7200, the riding data stored in the enterprise or organization account can be used to obtain carbon credit certification. In step 7300, the obtained carbon credits can be exchanged (e.g., transacted) on the carbon credit exchange platform.

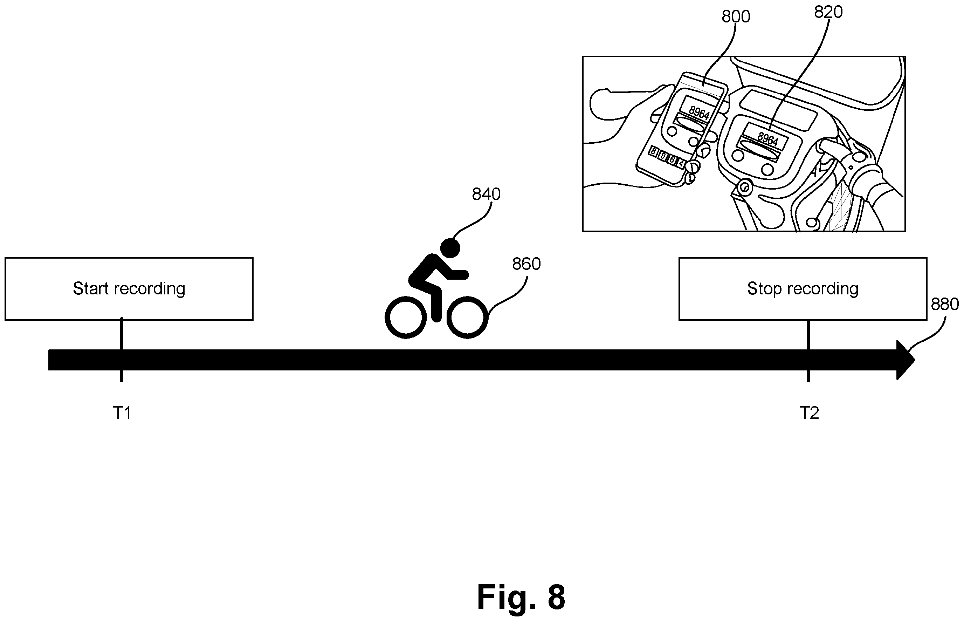

Fig. 8 is a schematic diagram illustrating example operations for distance measurements including GPS sensors of a bicycle 860 in a system for recording and verifying cycling activities, according to some embodiments of the present disclosure. As shown in Fig. 8, in some embodiments, a riding distance is measured by an application of a mobile device 800 or a cycling computer 820 using GPS signals. For example, when a user 840 starts riding the bicycle 860 (e.g., T1 on a timeline 880), the mobile device 800 or the cycling computer 820 can start recording a GPS location of the bicycle 860, until the user 840 stops riding the bicycle 860 (e.g., T2 on the timeline 880). The system may also dynamically adjust a recording mode during a riding time interval (e.g., from T1 to T2) according to a power or battery status of the mobile device 800 or the cycling computer 820. For example, in response to a high battery status, the GPS location can be tracked at all times continuously. In response to a low battery status, the GPS location can be recorded periodically, with a configured time interval (e.g., 10 seconds). In response to an extreme low battery status, the starting GPS location and the ending GPS location can be recorded. The recorded GPS data can be uploaded to a cloud server in various ways. For example, for the mobile device 800 such as a mobile phone, the recorded GPS data can be transmitted via a mobile network. For an OBU installed on the bicycle, the recorded GPS data can be transmitted via the mobile network, or via a bike-sharing dock or bike-sharing kiosk machine of the system using, for example, Wi-Fi communications. The recorded GPS data may also be uploaded after the bicycle is connected (e.g., physically) to a docking station or a parking rack communicating with the cloud server, or via other utility poles.

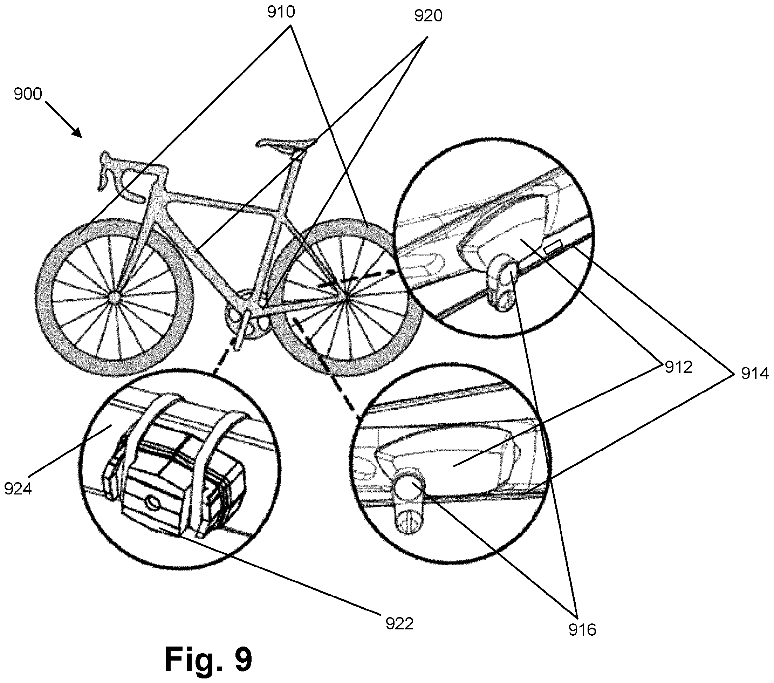

Fig. 9 is a schematic diagram illustrating example operations for distance measurements including a speed sensor 912 of a bicycle 900 in a system for recording and verifying cycling activities, according to some embodiments of the present disclosure. As shown in Fig. 9, the bicycle 900 includes a bike frame 920, wheels 910, spokes 914, a speed magnet component 916 attached on one of the spokes 914 and not connected or contact to the speed sensor 912, and a cadence magnet component 922 located on a crank arm 924. The speed sensor 912 may interact with the speed magnet component 916 or the cadence magnet component 922 according to rotations of the wheels 910 or the crank arm 924, and may detect the number of the rotations of the wheels 910 or the crank arm 924, to determine the speed or cadence of the bicycle 900, so as to obtain the riding distance. In some embodiments, the riding distance is measured by a cycling computer installed on the bicycle 900 using the speed sensor 912, the cadence magnet component 922, or the speed magnet components 916. For example, when a user starts riding the bicycle 900, the cycling computer can start recording a speed of the bicycle 900 as detected by the speed sensor 912, until the user stops riding the bicycle 900. For example, the speed can be detected by using the speed sensor 912 installed on the bike frame 920, the speed magnet component 916, or the cadence magnet component 922, or by using the speed sensor 912 installed on the bike frame 920 providing optical detection mechanism. In some embodiments, the speed sensor 912 may also be implemented by an optical speed sensor. For example, the speed sensor 912 may include an optical emitter and an optical sensor to continuously detect a light source. The speed sensor 912 may detect an interruption signal, when one of the spokes 914 blocks the optical signal during the rotations of the wheels 910. For example, the speed sensor 912 may detect 24, 28 or 32 interruption signals in one rotation of a wheel 910 having 24, 28 or 32 spokes. According to the number of the detected interruption signals, the speed sensor 912 may obtain the riding distance accordingly. For example, in some embodiments, the speed sensor 912 can be configured to detect a rotational speed of the wheels 910, which may be converted to a riding distance directly or indirectly. In some embodiments, the speed sensor 912 may perform the detection and return the collected data continuously or periodically. An application on a mobile device of the user or the cycling computer can be used to designate a time interval for the calculation.

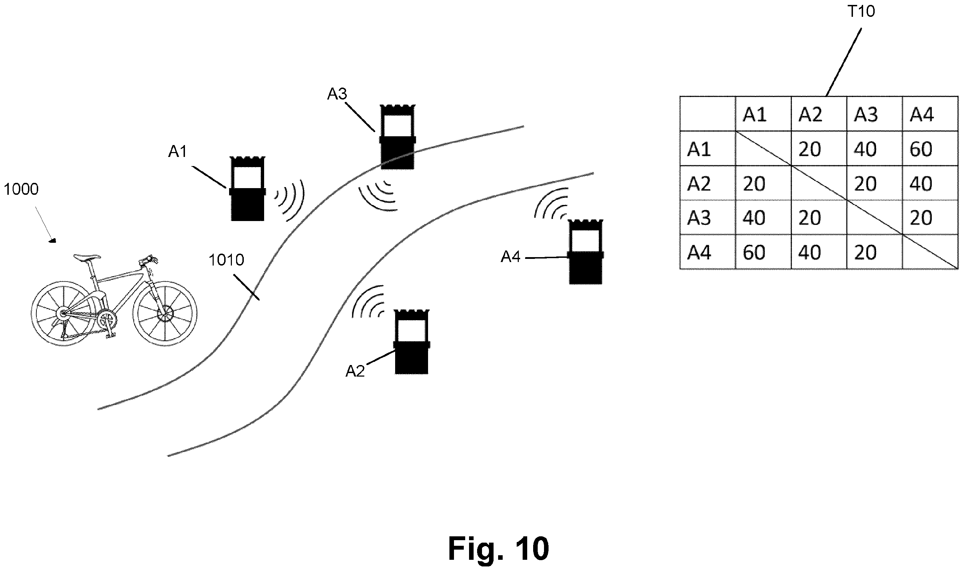

Fig. 10 is a schematic diagram illustrating example operations for distance measurements including RFID sensors in a system for recording and verifying cycling activities, according to some embodiments of the present disclosure. As shown in Fig. 10, in some embodiments, a riding distance is measured using RFID signals. For example, the system may include densely located and electric-powered detecting or sensing points A1-A4 (e.g., bike-sharing kiosk machines or utility poles) with the RFID sensors, may record a location of each detecting or sensing points A1-A4 of the system, and may obtain a built-in distance table T10 storing corresponding distance values between any two of the detecting or sensing points A1-A4. For example, the distance between detecting or sensing points A1 and A2 is 20. Accordingly, the system may use the detecting or sensing points to actively send RFID signals to and receive RFID signals back from a bicycle 1000 on a road or a bicycle path 1010 with a RFID tag, and use the built-in distance table T10 to look up a riding distance.

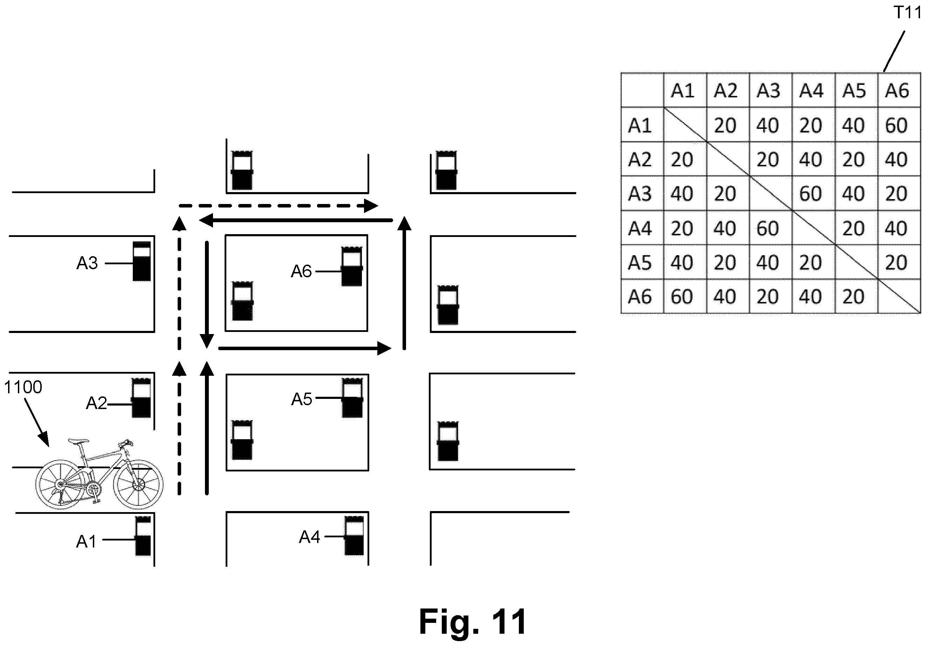

Fig. 11 is a schematic diagram illustrating example operations for distance measurements including RFID signal in a system for recording and verifying cycling activities, according to some embodiments of the present disclosure. As shown in Fig. 11, in some embodiments, at least one of detecting or sensing points A1-A6 (e.g., bike-sharing kiosk machines or utility poles) is located at one intersection. The accuracy can be improved when two of the detecting or sensing points A1-A6 are located at the same intersection. Distances between any two of the detecting or sensing points A1-A6 are stored in a built-in distance table T11. For example, the distance between detecting points A1 and A2 is 20.

For a route of a bicycle 1100 represented by the dotted arrow in Fig. 11, e.g., from A1 to A2, A2 to A3, and A3 to A6, a total riding distance of the bicycle 1100 can be calculated using two different methods. In the first method, the distances for corresponding detecting or sensing points A1-A6 of a path are retrieved from the built-in distance table T11, e.g., 20, 20, and 20, to calculate the sum value, e.g., 60, as to obtain the total riding distance.

In the second method, the system can determine (e.g., calculate) whether a repeated detecting or sensing point exists. After confirming that the route does not include repeated detecting or sensing points, the system can (e.g., directly) retrieve the distance, e.g., 60, between the starting and ending detecting or sensing points, e.g., A1 to A6, from the built-in distance table T11.

For another route of the bicycle 1100 represented by the solid arrow in Fig. 11, e.g., from A1 to A2, A2 to A5, A5 to A6, A6 to A3, and A3 to A2, the total riding distance can also be calculated using two different methods. In the first method, the distances for corresponding detecting or sensing points A1-A6 of a path are retrieved from the built-in distance table T11, e.g., 20, 20, 20, 20 and 20, to calculate the sum value, e.g., 100, as to obtain a total riding distance of the bicycle 1100. In the second method, the system can determine (e.g., calculate) whether a repeated detecting or sensing point exists, and removes unnecessary detecting or sensing point(s). After removing the unnecessary detecting or sensing points (e.g., intermediate points A2, A5, and A3), the system can retrieve the corresponding distances, e.g., 60 (i.e., A1 to A6) and 40 (i.e., A6 to A2), from the built-in distance table T11, e.g., 20, 20, 20, 20 and 20, to calculate the sum value to obtain the total riding distance.

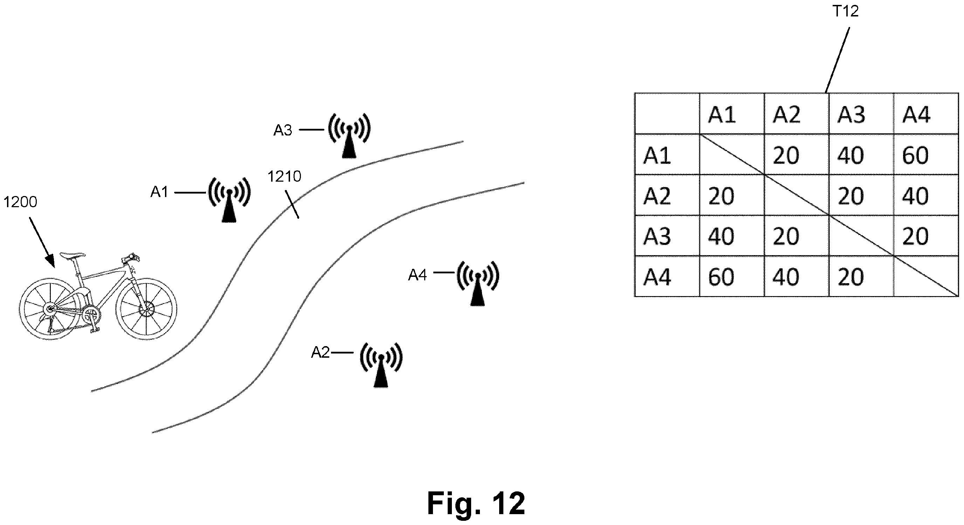

Figs. 12-16 are schematic diagrams illustrating example operations for distance measurements including beacon signals in a system for recording and verifying cycling activities, according to some embodiments of the present disclosure. As shown in Fig. 12, in some embodiments, a riding distance is measured using beacon signals. For example, the system may record a location of each station A1-A4 sending the beacon signals, and obtain a distance table T12 storing corresponding distance values between any two of the stations A1-A4. Accordingly, a bicycle 1200 equipped with a beacon receiving device can be configured to receive the beacon signals when passing each of the stations A1-A4 along a road or bicycle path 1210. For example, the distance between detecting points A1 and A2 is 20.

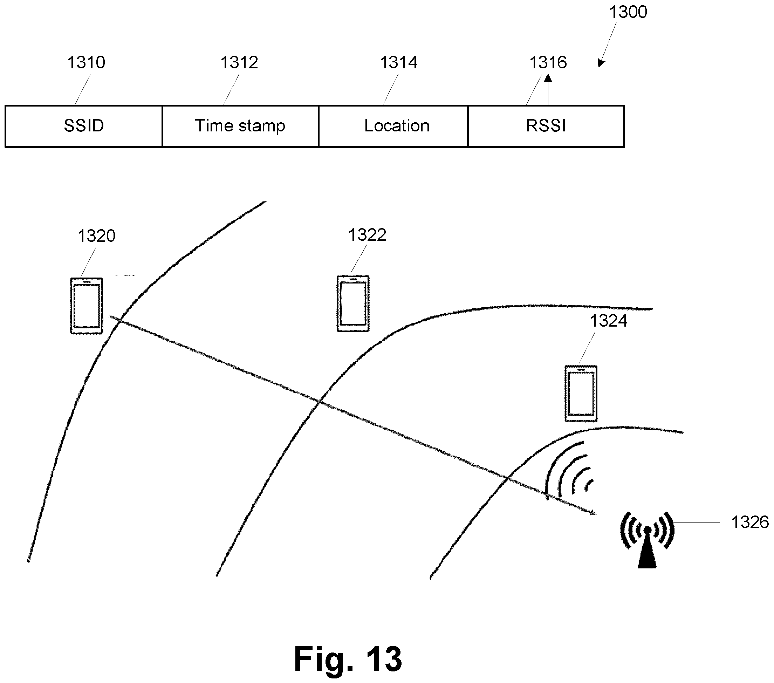

Fig. 13 shows a scenario where the Received Signal Strength Indicator (RSSI) changes, depending on different distances. Specifically, beacon technology allows different levels of interaction at each range. Recorded data 1300 may include information of Service Set Identifier (SSID) 1310, a time stamp 1312, location 1314, and RSSI 1316. As shown in Fig. 13, the RSSI value varies according to distance between receivers 1320, 1322 and 1324 (e.g., a beacon receiving device installed on a bicycle) and a station 1326 broadcasting beacon signals. For example, the RSSI value becomes smaller when the distance becomes greater.

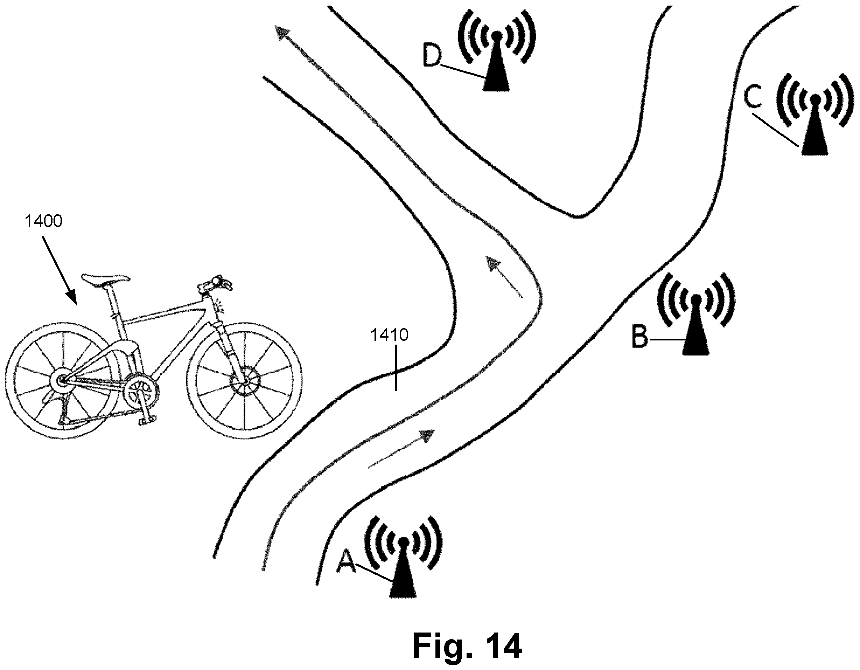

Fig. 14 shows a scenario where a user rides a bicycle 1400 along a road or a bicycle path 1410, starting from a first location near a station A to a second location near a station D. During the cycling, each beacon signal is recorded, and a riding distance is calculated or estimated based on the locations of the stations A, B and D. For example, a route of the bicycle 1400 represented by the solid arrow passing through at least stations A, Band D, and a total riding distance can be obtained according to a weighting coefficient, the distance from the station A to the station B, and the distance from the station B to the station D, wherein the weighting coefficient is associated with a type of the bicycle 1400. For example, the weighting coefficient may be 1 when the user rides a human-powered bicycle, and may be any value between 0 to 1 when the user rides an electric bicycle, according to a level of assistance a motor provides during the cycling.

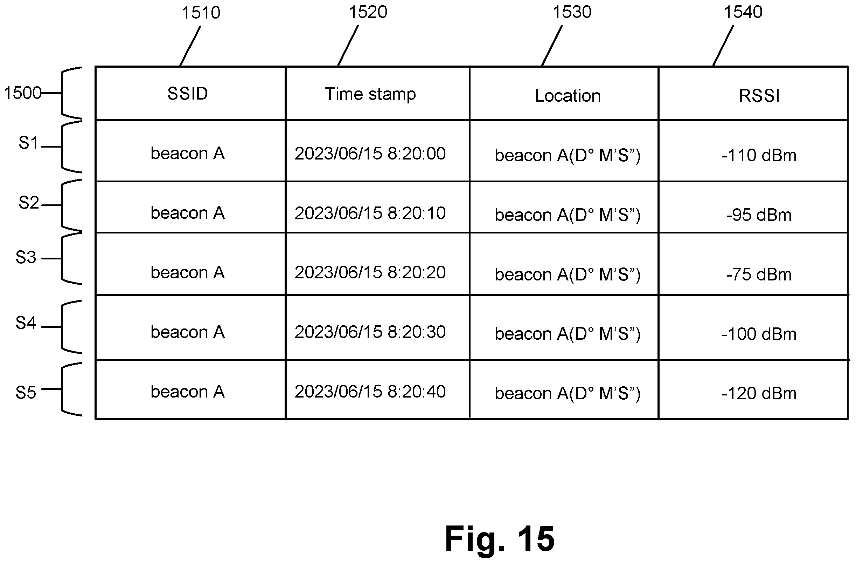

As shown in the examples of Fig. 15, multiple signals S1-S5 are received and (e.g., temporarily) recorded in a data format 1500 including information of a SSID 1510, a time stamp 1520, location 1530, and RSSI 1540. When a bicycle passes a specific station broadcasting beacon signals, a beacon receiver device of a bicycle continuously receives broadcasting beacon signals from an adjacent beacon station. Taking a station with SSID "beacon A" as an example, the RSSI values gradually becomes stronger when the bicycle approaches the station with the SSID "beacon A", and the signal gradually becomes weaker when the bicycle leaves the station with the SSID "beacon A" (e.g., the change of the RSSI value). When the bicycle passes the station with the SSID "beacon A", after multiple broadcasting signals S1-S5 are received one after another and recorded in the data format 1500, the greatest RSSI value (e.g., -75 dBm) and its corresponding time stamp (e.g., 2023/06/15 8:20:20) can be obtained and recorded.

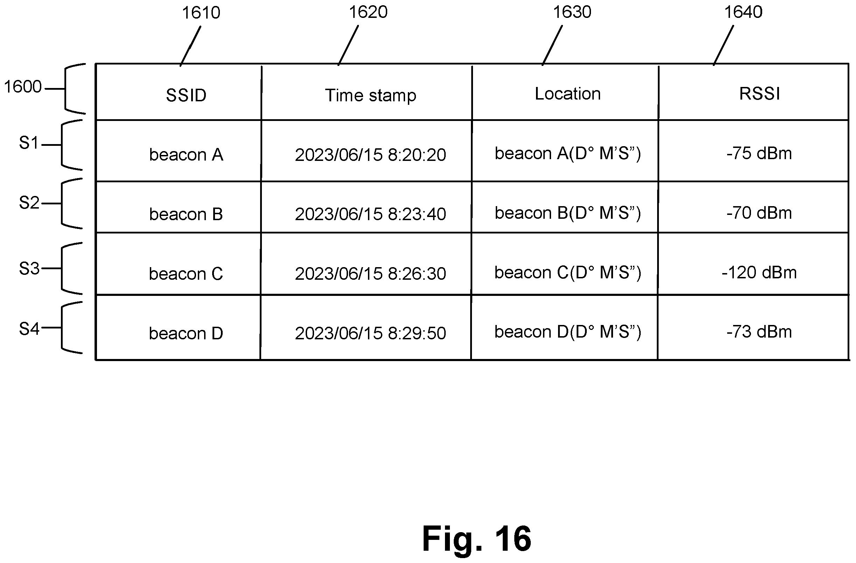

As shown in the examples of Fig. 16, multiple signals S1-S4 are received and (e.g., temporarily) recorded in a data format 1600 including information of a SSID 1610, a time stamp 1620, location 1630, and RSSI 1640. When a bicycle passes a station with SSID "beacon B" and a beacon receiver device of the bicycle receives a broadcasting signal from the station with the SSID "beacon B", other relatively weak signal(s) from at least one distant station (e.g., a station with SSID "beacon C") may be received at the same time. Invalid records may be filtered by determining whether a RSSI value reaches a reasonable signal quality threshold (e.g., greater than or equal to -90 dBm, or between -60 to -90 dBm). In the examples of Fig. 16, it can be determined that the bicycle passed through a station with SSID "beacon A", the station with SSID "beacon B", and a station with SSID "beacon D", but the bicycle did not pass through the station with SSID "beacon C". Finally, an effective riding distance of the bicycle may be estimated based on relative geographic locations of the stations with SSIDs "beacon A", "beacon B", and "beacon D", respectively, and then converted into carbon credits according to the weighted index.

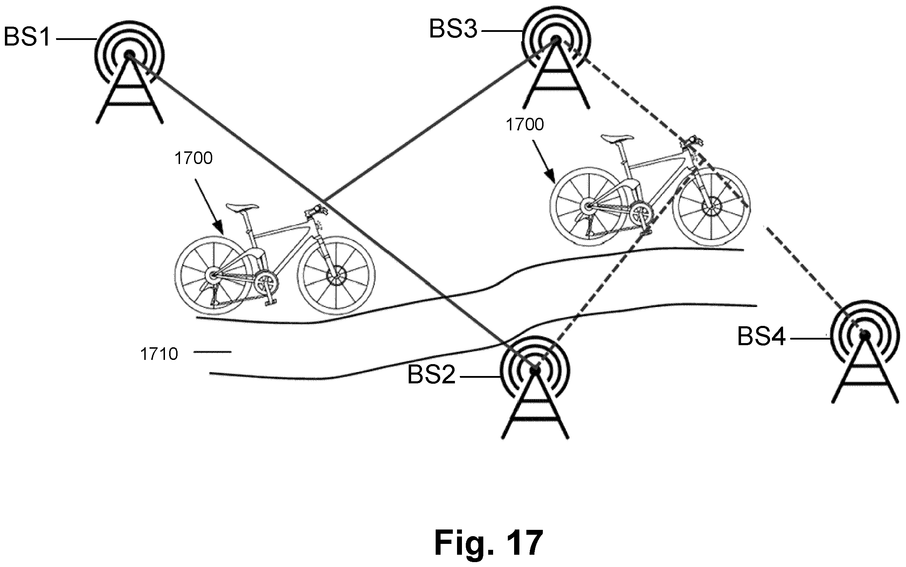

Fig. 17 is a schematic diagram illustrating example operations for distance measurements including mobile network signals in a system for recording and verifying cycling activities, according to some embodiments of the present disclosure. As shown in Fig. 17, in some embodiments, a riding distance is measured by an application of a mobile phone of a user or a cycling computer using mobile network signals from base stations BS1-BS4 when the user rides a bicycle 1700 along a road or a cycling path 1710. For example, at least three (e.g., nearest) base stations (e.g., base stations BS1-BS3 or base stations BS2-BS4) are used to calculate possible locations of a bicycle 1700 at any time. The application on the mobile device or the cycling computer continues to record the location of the bicycle 1700 during the cycling. In some embodiments, a recording process starts after a start command is received, and after a stop command is received, the recording process ends and recorded data is uploaded, for example, to a cloud server.

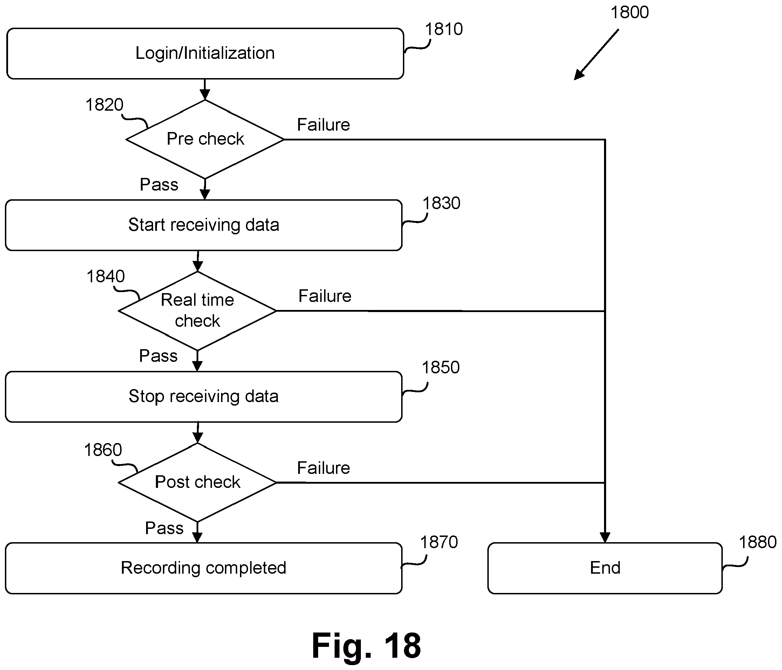

Fig. 18 is a flowchart of a process 1800 illustrating example operations for data verification in a system for recording and verifying cycling activities, according to some embodiments of the present disclosure. In some embodiments, different checking rules may be designed for different scenarios. For example, the system may apply different checking rules for a personal bicycle, a rental bicycle or a shared bicycle to verify data validity. In step 1810, in response to receiving a login request from a user, the system may initiate a recording process. In step 1820, in response to receiving a start command (e.g., from the mobile phone or cycling computer, when a saddle is weighted), the system may perform a precheck before actually recording data, e.g., distance information, received from a sensor. In the condition that the precheck is verified (e.g., passed), in step 1830, the system starts receiving the data from the sensor. Otherwise, in step 1880, the system may terminate the recording process in the condition that the precheck is failed. In some other embodiments, the system may skip the precheck in step 1820 and start receiving the data from the sensor directly, if one or more other verification processes (e.g., steps 1840 and/or 1860) are enabled.

In step 1840, the system may periodically or continuously perform a real-time check when the data is received from the sensor during the cycling. In the condition that the real-time check is failed, in step 1880, the system may terminate the recording process without uploading the recorded data. In some other embodiments, the system may skip the real-time check in step 1840 during the cycling, if one or more other verification processes (e.g., steps 1820 and/or 1860) are enabled.

In step 1850, in response to a stop command (e.g., from the mobile phone or cycling computer, when saddle is not weighted), the system stops receiving the data from the sensor. Then, in step 1860, the system may perform a post check before uploading the recorded data. In the condition that the post check is passed, in step 1870, the system may upload the recorded data to the cloud server and complete the recording process. Otherwise, in the condition that the post check is failed, in step 1880, the system may terminate the recording process without uploading the recorded data. In some other embodiments, the system may skip the post check in step 1860 and upload the recorded data to the cloud server and complete the recording process, if one or more other verification processes (e.g., steps 1820 and/or 1840) are enabled.

Optionally, in the precheck process performed in step 1820, the system may determine whether the difference between the current location and the last recorded location and the difference between the current time and the last recorded time meet the condition, to avoid recording abnormal movement of the bicycle and prevent fraudulent use of the system, such as falsified location and/or time information (e.g., fake GPS signals). Different distance values may correspond to different time interval ranges. For example, for a short commuting distance of 0-5 km, no checking is required. For a commuting distance of 5-10 km, the time interval needs to be greater than 10 minutes (e.g., an average speed of 30 km/hr.). For a commuting distance of 10-50 km (e.g., an intra-city commute), the time interval needs to be greater than at least 15 minutes (e.g., an average speed of 40 km/hr.). For a commuting distance of 50-300 km (e.g., an inter-city commute), the time interval needs to be greater than 38 minutes (e.g., an average speed of 80 km/hr.). For a commuting distance of 300-600 km, the time interval needs to be greater than at least 90 minutes (e.g., an average speed of 200 km/hr.). For a commuting distance over 600 km, the time interval needs to be greater than 45 minutes (e.g., an average speed of 800 km/hr.).

Optionally, in the real-time process performed in step 1840, the system may determine whether a calculated velocity value is under a safety upper limit value (e.g., 40km/hr.). In response to the calculated velocity value exceeding the range, the system may stop the recording. The system may also determine whether a calculated acceleration value is under a safety upper limit value (e.g., 4km/hr.²). In response to the calculated acceleration value exceeding the range, the system may also stop the recording. The system may also determine whether the difference of velocity values is within a time interval. In response to the difference of velocity values exceeding a reasonable range (e.g., 5-50 km/hr. in the past 3 minutes), the system may also stop the recording. The system may also detect a weight on a saddle or a handlebar of the bicycle, and in response to no weight on the saddle or the handlebar being detected over a predetermined time interval, the system may stop the recording. For example, pressure sensor(s) may be located on the saddle or on the handlebar and configured to detect the pressure on the saddle or on the handlebar and provide information including the peak pressure value, distribution and area of the pressure on the saddle or on the handlebar, pressure values of specific positions on the saddle or on the handlebar, etc. Based on these data, the system may determine whether a user is actually riding the bike to prevent fraudulent use. The system may also detect the location of the bicycle, and in response to the detected location being outside of a predetermined area or region, the system may stop the recording.

Optionally, in the real-time process performed in step 1840, the system may perform a real-time check based on data collected from one or more sensors, including data from power sensor(s), cadence sensor(s), speed sensor(s), and/or motion sensor(s). The cadence sensor(s) are configured to sense the cadence, e.g., revolutions per minute (rpm). The speed sensor(s) are configured to sense the speed of bicycle, which can be computed based on the pedaling cadence and a gear ratio. In some embodiments, the system may also perform a real-time check based on biomedical data (e.g., signals) from sensors located on the bicycle or a wearable device. For example, the sensors may include electromyography (EMG) sensor(s), heart rate sensor(s), respiratory sensor(s), etc. The EMG sensor(s) and the heart rate sensor(s) are configured to detect an EMG amplitude and a heart rate of the user during pedaling. The respiratory sensor(s) are configured to detect an oxygen intake or a respiration rate of the user during pedaling. In addition, in some embodiments, the respiratory sensor(s) can further be configured to identify the user's workout state during pedaling. For example, the respiratory sensor(s) can be used to indicate whether the user's respiration is aerobic or anaerobic. The system may analyze detected biomedical data and determine whether a pattern of the biomedical data matches with a cycling behavior and performance (e.g., the cycling speed, the uphill and downhill conditions, etc.), to filter out abnormal, inaccurate, or potentially fraudulent data. For example, if the user's heart rate remains the same or even goes down when the bicycle is accelerating, the system may identify the biomedical data as an abnormal or potentially fraudulent data, and stop the recording.

Optionally, in the post check process performed in step 1860, the system may check a riding distance recorded or a total cycling time recorded. In some embodiments, the system may determine that the post check is failed in response to a single riding distance recorded being greater than a preset value (e.g., for an inter-city commute, 300km is preset), or in response to a total cycling time recorded being greater than a preset value (e.g., for an inter-city commute, 2hr is preset).

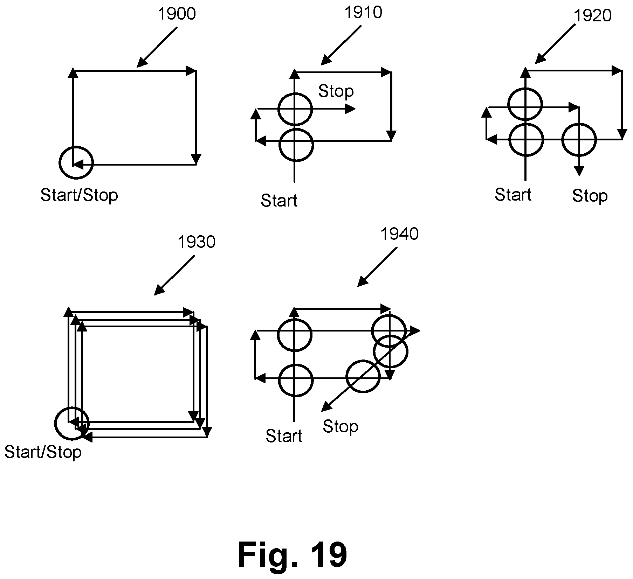

In some embodiments, the system may determine that the post check is failed in response to a recorded cycling route being an abnormal or suspicious pattern. Fig. 19 illustrates example valid cycling routes 1900, 1910 and 1920 and invalid cycling routes 1930 and 1940, according to some embodiments of the present disclosure. In Fig. 19, a repeated route is represented as a circle. For example, as shown in cycling route 1930, the system may determine that the post check is failed in response to the number of repeated routes in the recorded cycling route exceeding a preset value (e.g., 3). For example, when the number of intersections in the recorded cycling route exceeds a threshold value (e.g., 5), as shown in cycling route 1940, or the recorded cycling route repeatedly passes through the same intersection multiple times, the system may determine that the recorded cycling route is the abnormal or suspicious pattern, and the post check is failed.

Accordingly, as shown in Fig. 19, the system may detect various parameters and evaluate whether the detected parameters match with an abnormal or suspicious pattern of the cycling route, to perform a data verification and filter out abnormal or potentially fraudulent data. Thus, the recorded data can be verified and validated, assuring that carbon credits obtained based on the recorded data are valid and meet corresponding carbon credit standards and/or guidelines.

According to some embodiments, a system for recording and verifying cycling activities is provided to perform the methods described above. The system includes a sensor and a terminal device. The sensor is configured to detect a movement of a bicycle and provide distance information. The terminal device includes a user module, a conversion module, and a communication module.

The user module is configured to provide a user interface to enable users to log in and access personal information of the user. The conversion module is configured to convert the distance information received from the distance sensor into carbon footprint information. The communication module is configured to transmit the carbon footprint information to a server to update a carbon footprint record associated with at least the user or an organization. A transaction module communicating with the server or the communication module is configured to derive a carbon footprint credit based on one or more changes in the carbon footprint record. An account management module communicating with the server, the communication module, or the transaction module is configured to certify or verify the carbon footprint credit or exchange or transact in the carbon footprint credit.

In some embodiments, the terminal device is an on-board unit, a mobile device, a tablet, or a wearable device. In some embodiments, the terminal device is the on-board unit, and the sensor is installed on the bicycle. In some embodiments, the terminal device is the mobile device, and the sensor is incorporated into the mobile device.

In some embodiments, the personal information of the user includes riding data, the riding data comprising at least one of an accumulated riding distance, an accumulated riding time, a previous bicycle type, the carbon footprint record, or any combination thereof, or the carbon footprint information includes at least one of a current riding distance, a current riding time, a current bicycle type, or any combination thereof.

In some embodiments, the conversion module is further configured to transmit the carbon footprint information to the server to update the carbon footprint record, when the distance information or the carbon footprint information is verified.

According to some embodiments, a method for recording and verifying cycling activities is provided to be performed in the system described above. The method includes receiving a login request from a user; performing a first check on whether a distance difference of a current location and a last recorded location corresponds to a time interval range of a current time and a last recorded time, in response to receiving a start command; receiving distance information from a sensor, in response to the first check is verified; performing a second check on the distance information; stopping receiving the distance information from the sensor, in response to the second check is verified and receiving a stop command; performing a third check on carbon footprint information converted from the distance information; and transmitting the carbon footprint information to a server to update a carbon footprint record, in response to the third check is verified.

In some embodiments, the sensor includes a speed sensor, a global positioning system (GPS) sensor or an acceleration sensor installed on a bicycle, or an electromyography (EMG) sensor, a heart rate sensor or a respiratory sensor worn by the user.

In some embodiments, the second check is to verify whether the distance information is in a predetermined range set for the sensor.

In some embodiments, the second check is to verify whether the distance information and another distance information received from another sensor are in a predetermined correspondence.

In some embodiments, the third check is to verify whether the carbon footprint information corresponds to a predetermined range set for the cycling activities.

In some embodiments, the third check is to verify the number of different intersections where the user passes during the cycling activities is greater than a first predetermined threshold value.

In some embodiments, the third check is further to verify whether the number of the same intersection where the user passes during the cycling activities is greater than a second predetermined threshold value.

According to some embodiments, a non-transitory computer-readable medium storing instructions that is executable by at least one processor of a system to cause the system to perform a method for recording and verifying cycling activities. The method includes: receiving a login request from a user; performing a first check on whether a distance difference of a current location and a last recorded location corresponds to a time interval range of a current time and a last recorded time, in response to receiving a start command; receiving distance information from a sensor, in response to the first check is verified; performing a second check on the distance information; stopping receiving the distance information from the sensor, in response to the second check is verified and receiving a stop command; performing a third check on carbon footprint information converted from the distance information; and transmitting the carbon footprint information to a server to update a carbon footprint record, in response to the third check is verified.

In some embodiments, the sensor includes a speed sensor, a global positioning system (GPS) sensor or an acceleration sensor installed on a bicycle, or an electromyography (EMG) sensor, a heart rate sensor or a respiratory sensor worn by the user.

In some embodiments, the second check is to verify whether the distance information is in a predetermined range set for the sensor.

In some embodiments, the second check is to verify whether the distance information and another distance information received from another sensor are in a predetermined correspondence.

In some embodiments, the third check is to verify whether the carbon footprint information corresponds to a predetermined range set for the cycling activities.

In some embodiments, the third check is to verify the number of different intersections where the user passes during the cycling activities is greater than a first predetermined threshold value.

In some embodiments, the third check is further to verify whether the number of the same intersection where the user passes during the cycling activities is greater than a second predetermined threshold value.

According to some embodiments, a system for recording and verifying cycling activities is provided to perform the methods described above. The system includes: an interface configured to receive an output from a sensor configured to detect a location reference of a bicycle associated or registered with the system; and a user module configured to provide a user interface to enable a user to access an account associated with the user, an organization, or both; a footprint generation module configured to receive through the interface the location reference of the bicycle to obtain, based at least on a movement of the bicycle or the location reference, carbon footprint information; and a record update module configured to update, based on the carbon footprint information, a carbon footprint record associated with the account; wherein a transaction module communicating with the record update module or a server storing information associated with the account is configured to derive a carbon footprint credit based on one or more changes in the carbon footprint record or the carbon footprint information; wherein an account management module communicating the record update module, the server, or the transaction module is configured to certify the carbon footprint credit or to enable exchange using the carbon footprint credit or the carbon footprint information.

In some embodiments, the system is an on-board unit associated with the bicycle or a mobile, tablet, or wearable device associated with a user.

In some embodiments, the sensor is installed on or incorporated within the bicycle or the mobile, tablet, or wearable device.

In some embodiments, the account associated with the user is linked to records including riding data, the riding data comprising at least one of an accumulated riding distance, an accumulated riding time, a bicycle type, the carbon footprint record, or any combination thereof, and the carbon footprint information includes at least one of a current riding distance, a current location reference, a current speed, a current riding time, a current bicycle or ride type, or any combination thereof.

In some embodiments, the record update module is further configured to transmit the carbon footprint information to the server to update the carbon footprint record, when a distance information or the carbon footprint information is verified.

According to some embodiments, a method for recording and verifying cycling activities is provided to be performed in the system described above. The method includes: receiving a request from a user; performing a first reference verification based on at least two categories of information from a current location, a last recorded location, a current time, and a last recorded time, in response to a start command; receiving a location, speed, distance, or active state data associated with the user or a user device, in response to a confirmed first reference verification; performing a second reference verification based on at least two categories of information including time, location, speed, distance, or active state data associated with the user; and processing an updated location, speed, distance, or active data associated with the user in response to a confirmed second reference verification to generate carbon footprint information.

In some embodiments, the method further includes processing the carbon footprint information to update a carbon footprint record in response to a confirmed third reference verification based on the updated location, speed, or distance.

In some embodiments, the location, speed, or distance data and the updated location, speed, or distance data are provided by a sensor including a speed sensor, a global positioning system (GPS) sensor or an acceleration sensor installed on a bicycle.

In some embodiments, the active state data and the updated active state data are provided by an electromyography (EMG) sensor, a heart rate sensor, or a respiratory sensor worn by the user.

According to some embodiments, a non-transitory computer-readable medium storing instructions that is executable by at least one processor of a system to cause the system to perform a method for recording and verifying cycling activities. The method includes: receiving a request from a user; performing a first reference verification based on at least two categories of information from a current location, a last recorded location, a current time, and a last recorded time, in response to a start command; receiving a location, speed, distance, or active state data associated with the user or a user device, in response to a confirmed first reference verification; performing a second reference verification based on at least two categories of information including time, location, speed, distance, or active state data associated with the user; and processing an updated location, speed, distance, or active data associated with the user in response to a confirmed second reference verification to generate carbon footprint information.

In some embodiments, the method further includes processing the carbon footprint information to update a carbon footprint record in response to a confirmed third reference verification based on the updated location, speed, or distance.

In some embodiments, the location, speed, or distance data and the updated location, speed, or distance data are provided by a sensor including a speed sensor, a global positioning system (GPS) sensor or an acceleration sensor installed on a bicycle.

In some embodiments, the active state data and the updated active state data are provided by an electromyography (EMG) sensor, a heart rate sensor, or a respiratory sensor worn by the user.

A person of ordinary skill in the art can understand that all or some of the steps of various methods in the foregoing embodiments may be implemented by a program instructing related hardware of a terminal device. The program can be stored in a transitory or non-transitory computer-readable medium. The transitory or non-transitory computer-readable storage medium may include removable and nonremovable storage devices including, but not limited to: a flash drive, a read-only memory (ROM), a random-access memory (RAM), a magnetic disk, an optical disc, or the like.

The embodiments of the present disclosure further provide a transitory or non-transitory computer-readable medium. Optionally, in some embodiments, the above-mentioned computer-readable medium can be configured to store the instructions and executable by at least one processor of a system to cause the system to perform a method for recording and verifying cycling activities in the foregoing embodiments.

In some embodiments, the terminal device may include one or more processors, and a memory to implement the modules. In addition, the modules in the embodiments of the present disclosure may be integrated into one processing unit, or each of the modules may be physically separated, or two or more modules may be integrated into one module. The integrated module may be implemented as hardware, or a software functional unit.

The memory can be configured to store software programs and modules, such as program instructions/modules corresponding to the methods in the above embodiments of the present disclosure. The one or more processors execute various function applications and data processing by running the software programs and modules stored in the memory, that is, implement the above-mentioned methods. The memory may include a high-speed random memory, and may also include a non-volatile memory, for example, one or more magnetic storing devices, a flash memory, or other nonvolatile solid-state memories. The processor(s) can call the information and application programs stored in memory to perform the operations of the above methods according to the foregoing embodiments.

As used herein, the term "or" encompasses all possible combinations, except where infeasible. For example, if it is stated that a device, structure, or module may include A or B, then, unless specifically stated otherwise or infeasible, the device, structure, or module may include A, or B, or A and B. As a second example, if it is stated that a device, structure, or module may include A, B, or C, then, unless specifically stated otherwise or infeasible, it may include A, or B, or C, or A and B, or A and C, or B and C, or A and B and C.

It will be apparent to those skilled in the art that various modifications and variations can be made to the disclosed methods or devices. Additionally, it is also possible to combine features or components from different embodiments of the present disclosure based on practical needs. Other embodiments will be apparent to those skilled in the art from consideration of the specification and practice of the disclosed device and related methods and operations.

The following non-limiting clauses provide illustrative examples of embodiments of the present disclosure:
Clause 1. A system for recording and verifying cycling activities, comprising: a sensor configured to detect a movement of a bicycle and provide distance information; and a terminal device comprising: a user module configured to provide a user interface to enable a user to log in and access personal information of the user; a conversion module configured to convert the distance information received from the sensor into carbon footprint information; and a communication module configured to transmit the carbon footprint information to a server to update a carbon footprint record associated with an account associated with at least the user or an organization; wherein a transaction module communicating with the server or the communication module is configured to derive a carbon footprint credit based on one or more changes in the carbon footprint record, wherein an account management module communicating with the server, the communication module, or the transaction module is configured to certify or verify the carbon footprint credit or exchange or transact in the carbon footprint credit.
Clause 2. The system according to clause 1, wherein the terminal device is an on-board unit, a mobile device, a tablet, or a wearable device.
Clause 3. The system according to clause 2, wherein the terminal device is the on-board unit, and the sensor is installed on the bicycle.
Clause 4. The system according to clause 2, wherein the terminal device is the mobile device, and the sensor is incorporated into the mobile device.
Clause 5. The system according to any of clauses 1-4, wherein the personal information of the user comprises riding data, the riding data comprising at least one of an accumulated riding distance, an accumulated riding time, a previous bicycle type, the carbon footprint record, or any combination thereof, or wherein the carbon footprint information comprises at least one of a current riding distance, a current riding time, a current bicycle type, or any combination thereof.
Clause 6. The system according to any of clauses 1-5, wherein the conversion module is further configured to transmit the carbon footprint information to the server to update the carbon footprint record, when the distance information or the carbon footprint information is verified.
Clause 7. A method for recording and verifying cycling activities comprising: receiving a login request from a user; performing a first check on whether a distance difference of a current location and a last recorded location corresponds to a time interval range of a current time and a last recorded time, in response to receiving a start command; receiving distance information from a sensor, in response to the first check is verified; performing a second check on the distance information; stopping receiving the distance information from the sensor, in response to the second check is verified and receiving a stop command; performing a third check on carbon footprint information converted from the distance information; and transmitting the carbon footprint information to a server to update a carbon footprint record, in response to the third check is verified.
Clause 8. The method according to clause 7, wherein the sensor comprises a speed sensor, a global positioning system (GPS) sensor or an acceleration sensor installed on a bicycle, or an electromyography (EMG) sensor, a heart rate sensor or a respiratory sensor worn by the user.
Clause 9. The method according to any of clauses 7-8, wherein the second check is to verify whether the distance information is in a predetermined range set for the sensor.
Clause 10. The method according to any of clauses 7-9, wherein the second check is to verify whether the distance information and another distance information received from another sensor are in a predetermined correspondence.
Clause 11. The method according to any of clauses 7-10, wherein the third check is to verify whether the carbon footprint information corresponds to a predetermined range set for the cycling activities.
Clause 12. The method according to any of clauses 7-11, wherein the third check is to verify the number of different intersections where the user passes during the cycling activities is greater than a first predetermined threshold value.
Clause 13. The method according to any of clauses 7-12, wherein the third check is further to verify whether the number of the same intersection where the user passes during the cycling activities is greater than a second predetermined threshold value.
Clause 14. A non-transitory computer-readable medium storing instructions that is executable by at least one processor of a system to cause the system to perform a method for recording and verifying cycling activities, the method comprising: receiving a login request from a user; performing a first check on whether a distance difference of a current location and a last recorded location corresponds to a time interval range of a current time and a last recorded time, in response to receiving a start command; receiving distance information from a sensor, in response to the first check is verified; performing a second check on the distance information; stopping receiving the distance information from the sensor, in response to the second check is verified and receiving a stop command; performing a third check on carbon footprint information converted from the distance information; and transmitting the carbon footprint information to a server to update a carbon footprint record, in response to the third check is verified.
Clause 15. The non-transitory computer-readable medium according to clause 14, wherein the sensor comprises a speed sensor, a global positioning system (GPS) sensor or an acceleration sensor installed on a bicycle, or an electromyography (EMG) sensor, a heart rate sensor or a respiratory sensor worn by the user.
Clause 16. The non-transitory computer-readable medium according to any of clauses 14-15, wherein the second check is to verify whether the distance information is in a predetermined range set for the sensor.
Clause 17. The non-transitory computer-readable medium according to any of clauses 14-16, wherein the second check is to verify whether the distance information and another distance information received from another sensor are in a predetermined correspondence.
Clause 18. The non-transitory computer-readable medium according to any of clauses 14-17, wherein the third check is to verify whether the carbon footprint information corresponds to a predetermined range set for the cycling activities.
Clause 19. The non-transitory computer-readable medium according to any of clauses 14-18, wherein the third check is to verify the number of different intersections where the user passes during the cycling activities is greater than a first predetermined threshold value.
Clause 20. The non-transitory computer-readable medium according to any of clauses 14-19, wherein the third check is further to verify whether the number of the same intersection where the user passes during the cycling activities is greater than a second predetermined threshold value.
Clause 21. A method for recording and verifying cycling activities comprising: receiving a request from a user; performing a first reference verification based on at least two categories of information from a current location, a last recorded location, a current time, and a last recorded time, in response to a start command; receiving a location, speed, distance, or active state data associated with the user or a user device, in response to a confirmed first reference verification; performing a second reference verification based on at least two categories of information comprising time, location, speed, distance, or active state data associated with the user; and processing an updated location, speed, distance, or active data associated with the user in response to a confirmed second reference verification to generate carbon footprint information.
Clause 22. The method according to clause 21, further comprising processing the carbon footprint information to update a carbon footprint record in response to a confirmed third reference verification based on the updated location, speed, or distance.
Clause 23. The method according to any of clauses 21-22, wherein the location, speed, or distance data and the updated location, speed, or distance data are provided by a sensor comprising a speed sensor, a global positioning system (GPS) sensor or an acceleration sensor installed on a bicycle.
Clause 24. The method according to any of clauses 21-23, wherein the active state data and the updated active state data are provided by an electromyography (EMG) sensor, a heart rate sensor, or a respiratory sensor worn by the user.
Clause 25. A non-transitory computer-readable medium storing instructions that is executable by at least one processor of a system to cause the system to perform a method for recording and verifying cycling activities, the method comprising: receiving a request from a user; performing a first reference verification based on at least two categories of information from a current location, a last recorded location, a current time, and a last recorded time, in response to a start command; receiving a location, speed, distance, or active state data associated with the user or a user device, in response to a confirmed first reference verification; performing a second reference verification based on at least two categories of information comprising time, location, speed, distance, or active state data associated with the user; and processing an updated location, speed, distance, or active data associated with the user in response to a confirmed second reference verification to generate carbon footprint information.
Clause 26. The non-transitory computer-readable medium according to clause 25, further comprising processing the carbon footprint information to update a carbon footprint record in response to a confirmed third reference verification based on the updated location, speed, or distance.
Clause 27. The non-transitory computer-readable medium according to any of clauses 25-26, wherein the location, speed, or distance data and the updated location, speed, or distance data are provided by a sensor comprising a speed sensor, a global positioning system (GPS) sensor or an acceleration sensor installed on a bicycle.
Clause 28. The non-transitory computer-readable medium according to any of clauses 25-27, wherein the active state data and the updated active state data are provided by an electromyography (EMG) sensor, a heart rate sensor, or a respiratory sensor worn by the user.

## Claims

1. A system (100) for recording and verifying cycling activities, comprising:
an interface configured to receive an output from a sensor configured to detect a location reference of a bicycle (860; 900; 1010; 1100; 1200) associated or registered with the system (100); and
a user module (122) configured to provide a user interface to enable a user to access an account associated with one or more of the user or an organization;
a footprint generation module (124) configured to receive through the interface the location reference of the bicycle to obtain, based at least on a movement of the bicycle (860; 900; 1010; 1100; 1200) or the location reference, carbon footprint information; and
a record update module configured to update, based on the carbon footprint information, a carbon footprint record associated with the account;
wherein a transaction module communicating with the record update module or a server storing information associated with the account is configured to derive a carbon footprint credit based on one or more changes in the carbon footprint record or the carbon footprint information;
wherein an account management module in communication with the record update module, the server, and/or the transaction module is configured to certify the carbon footprint credit, or to enable exchange using the carbon footprint credit or the carbon footprint information.

2. The system according to claim 1, wherein the system is an on-board unit associated with one or more of the bicycle (860; 900; 1010; 1100; 1200), a mobile device associated with a user, a tablet device associated with a user, or a wearable device associated with a user.

3. The system according to claim 2, wherein the sensor is installed on or incorporated within the bicycle (860; 900; 1010; 1100; 1200), the mobile device, the tablet device, or the wearable device.

4. The system according to any of claims 1-3, wherein the account associated with the user is linked to one or more records comprising riding data, the riding data comprising at least one of an accumulated riding distance, an accumulated riding time, a bicycle type, or the carbon footprint record, and wherein the carbon footprint information comprises at least one of a current riding distance, a current location reference, a current speed, a current riding time, a current bicycle, or ride type.

5. The system according to any of claims 1-4, wherein the record update module is further configured to, in response to determining that the distance information or the carbon footprint information is verified, transmit the carbon footprint information to the server to update the carbon footprint record.

6. A method for recording and verifying cycling activities, comprising:
receiving, by an interface, an output from a sensor configured to detect a location reference of a bicycle (860; 900; 1010; 1100; 1200) associated or registered with a system (100);
providing a user interface to enable a user to access an account associated with one or more of the user or an organization;
receiving through the interface the location reference of the bicycle to obtain, based at least on a movement of the bicycle (860; 900; 1010; 1100; 1200) or the location reference, carbon footprint information; and
updating, based on the carbon footprint information, a carbon footprint record associated with the account;
deriving a carbon footprint credit based on one or more changes in the carbon footprint record or the carbon footprint information;
certifying or enabling exchange of the carbon footprint credit using the carbon footprint credit or the carbon footprint information.

7. The method according to claim 6, wherein the account associated with the user is linked to one or more records comprising riding data, the riding data comprising at least one of an accumulated riding distance, an accumulated riding time, a bicycle type, or the carbon footprint record, and wherein the carbon footprint information comprises at least one of a current riding distance, a current location reference, a current speed, a current riding time, a current bicycle, or ride type.

8. The method according to claim 7, further comprising obtaining the riding data from one or more sensors associated with the bicycle (860; 900; 1010; 1100; 1200), a mobile device associated with the user, a tablet device associated with the user, or a wearable device associated with the user.

9. The method according to claim 8, wherein the one or more sensors are installed on or incorporated within the bicycle (860; 900; 1010; 1100; 1200), the mobile device, the tablet device, or the wearable device.

10. The method according to any of claims 6-9, further comprising, in response to determining that the distance information or the carbon footprint information is verified, transmitting the carbon footprint information to a server to update the carbon footprint record.
